Europäisches Patentamt

European Patent Office

Office européen des brevets

(11) Publication number: **0 129 920**
**B1**

# (12) EUROPEAN PATENT SPECIFICATION

(45) Date of publication of patent specification: **18.03.87**

(51) Int. Cl.⁴: **G 08 B 5/00**

(21) Application number: **84200664.5**

(22) Date of filing: **09.05.84**

(54) **Light reflecting safety belt.**

(30) Priority: **27.05.83 NL 8301902**

(43) Date of publication of application:
**02.01.85 Bulletin 85/01**

(45) Publication of the grant of the patent:
**18.03.87 Bulletin 87/12**

(84) Designated Contracting States:
**DE NL SE**

(56) References cited:
**CH-A- 357 655**
**CH-A- 425 557**
**FR-A-2 082 300**
**FR-A-2 450 294**
**GB-A-1 120 760**

(73) Proprietor: **Bandfabriek Hevatex B.V.**
**Stationsweg 391**
**NL-3925 CC Scherpenzeel (NL)**

(72) Inventor: **Valkenburg, Arie**
**Bergweg 12**
**NL-3911 VB Rhenen (NL)**

(74) Representative: **Kupecz, Arpad.et al**
**Octrooibureau Los en Stigter B.V. Postbox**
**20052**
**NL-1000 HB Amsterdam (NL)**

Courier Press, Leamington Spa, England.

# Description

The invention relates to a light reflecting safety belt, comprising two co-operating portions of a touch and close fastener, the operative face of the one fastener portion lying at the one side of the safety belt, while the operative face of the other fastener portion lies on the other side of the safety belt, one side of the safety belt being provided with at least one light reflecting strip-shaped portion, which extends only over a part of the width of the safety belt.

Such light reflecting safety belt is known from FR—A—2 082 300. In this known safety belt the co-operating fastener portions are connected to opposite sides of a band. The light reflecting strip-shaped portion extends on the band and is at one end covered by the respective fastener portion.

This known light reflecting safety belt has the disadvantage that the length each belt has in use can only be changed to a small extent as at any time the fastener portions have to be in contact with each other. Further, the known light reflecting safety belt is only light reflecting along its whole circumference when the fastener portion is wholly covered by the other end of the band.

GB—A—1 120 760 discloses a waist belt, composed of two fastener portions of a touch and close fastener which are connected to each other at one of their ends, whilst their operative faces are positioned at the same side of the belt. One end of the belt is provided with a buckle through which the other end of the belt can be threaded and can be folded back and pressed against the other portion so as to connect both portions at their free ends. However, this belt does not comprise one or more light reflecting strip-shaped portions.

It is an object of the present invention to provide a light reflecting safety belt wherein the above disadvantages are effectively removed.

For this purpose the light reflecting safety belt according to the invention is characterized in that the two co-operating fastener portions of the touch and close fastener are connected to each other at one of their ends and together substantially form the safety belt, while the light reflecting strip-shaped portion extends visibly over the whole length of the safety belt and is positioned on the operating face of one of the fastener portions and on the inoperative face of the other fastener portion.

In this way the effective length of the light reflecting safety belt can be chosen at will in view of the fact that the whole safety belt consists of the two fastener portions. Further, the light reflecting strip-shaped portion always extends over the whole circumference of the light reflecting safety belt.

The invention will hereafter be elucidated with reference to the drawing.

Fig. 1 is a perspective view of an embodiment of the light reflecting safety belt according to the invention.

Fig. 2 is a side view of a part of the light reflecting safety belt according to Fig. 1.

The light reflecting safety belt 1 shown in the drawing is composed of two touch and close fastener portions 2, 3, which connected with each other at one of their ends.

The connection of the two fastener portions 2, 3 may be effected by stitching, as schematically indicated in the drawing with a dashed line 4. However, other connecting methods are also possible; in particular a connection by means of ultrasonic sealing has given excellent results.

In the embodiment of the safety belt as shown in the drawing by way of example the fastener portion 2 is provided with loops, while the fastener portion 3 is provided with hooks, mushrooms or the like means, which cooperate with the loops of the fastener portion 2.

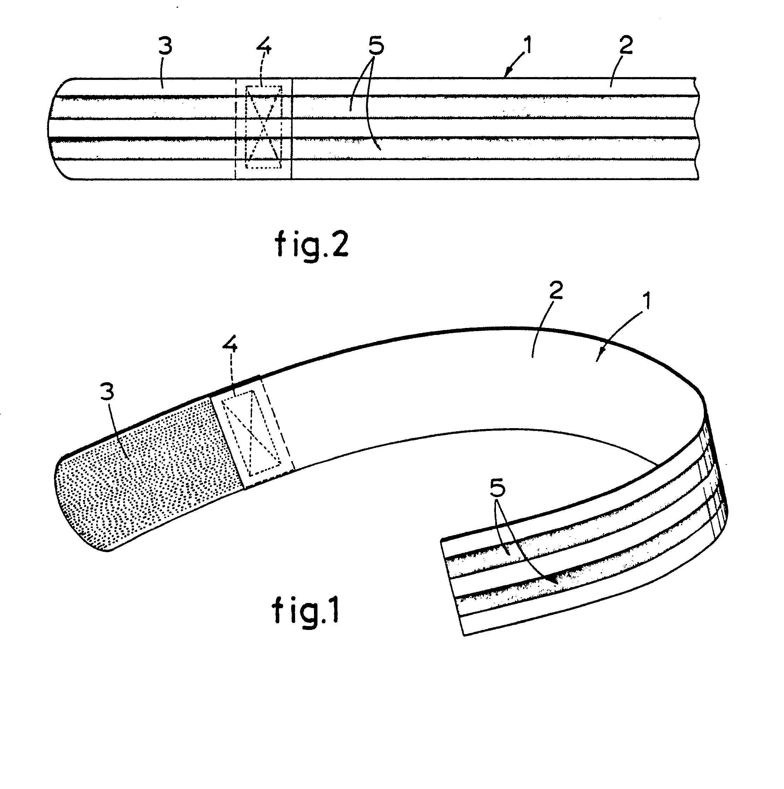

The operative face of the fastener portion 2 lies at the front side in Fig. 2, while the operative face of the fastener portion 3 is visible in Fig. 1. The operative faces of the two fastener portions 2, 3 are positioned at opposite sides of the safety belt 1.

One side of the safety belt 1 is provided with at least one light reflecting strip-shaped portion 5, which extends over only a part of the width, but over the whole length of the safety belt 1 and which, in the embodiment shown in the drawing, is applied on the operative face of the fastener portion 2 provided with loops and on the inoperative face of the fastener portion 3.

In this embodiment the fastener portions 2, 3 comprise two parallel light reflecting strip-shaped portions 5, which lie at a distance from the upper edges and from the lower edges of the fastener portions 2, 3. In this way a strip-shaped pattern is obtained, which is clearly visible in the traffic at night. Of course the safety belt 1 may also contain only one, or three or more light reflecting strip-shaped portions 5 in dependency of the width of the safety belt 1 and the width of the light reflecting strip-shaped portions 5.

As shown in the drawing the fastener portions 2 and 3 have lengths which considerably differ from each other. The length of the fastener portion 2, which is provided with loops is much larger than the length of the fastener portion 3. This fastener portion 3 has only a rather short length. As visible in the drawing the widths of both fastener portions 2 and 3 are substantially equal.

Due to the fact that the light reflecting strip-shaped portions 5 extend only over a portion of the width of the light reflecting safety belt 1, the fastener portions 2, 3 may be coupled at any desired location, while a free end part of the fastener portion 2, if present, will come to lie at the inner side of the safety belt 1, so that no loose end part is present.

# Claims

1. Light reflecting safety belt (1), comprising two co-operating portions (2, 3) of a touch and close fastener, the operative face of the one fastener portion (2 or 3) lying at the one side of the safety belt (1), while the operative face of the other fastener portion (3 or 2) lies on the other side of the safety belt (1), one side of the safety belt (1) being provided with at least one light reflecting strip-shaped portion (5), which extends only over a part of the width of the safety belt (1), characterized in that the two co-operating fastener portions (2, 3) of the touch and close fastener are connected to each other at one of their ends and together substantially form the safety belt (1), while the light reflecting strip-shaped portion (5) extends visibly over the whole length of the safety belt (1) and is positioned on the operative face of one of the fastener portions (2 or 3) and on the inoperative face of the other fastener portion (3 or 2).

2. Light reflecting safety belt according to claim 1, characterized in that the light reflecting strip-shaped portion (5) is positioned on the operative face of the fastener portion (2), which is provided with loops and on the inoperative face of the other fastener portion (3).

3. Light reflecting safety belt according to claim 2, characterized in that one (3) of the two fastener portions (2, 3) has only a relative short length compared with the other one.

4. Light reflecting safety belt according to claim 3, characterized in that the length of the fastener portion (2) which is provided with loops is much larger than the length of the other fastener portion (3).

5. Light reflecting safety belt according to any one of the preceding claims, characterized in that the widths of the two fastener portions (2, 3) are substantially equal.

6. Light reflecting safety belt according to any one of the preceding claims, characterized in that the two fastener portions (2, 3) are connected with each other by means of ultrasonic sealing.

**Patentansprüche**

1. Reflektierender Sicherheitsgürtel (1) mit zwei zusammenwirkenden Teilen (2, 3) eines Flächenverschlusses nach Art eines sogenannten Klettenverschlusses, wobei die wirksame Fläche des einen Verschlussteiles auf der einen Seite des Gürtels und die wirksame Fläche des anderen Verschlussteiles auf der anderen Seite des Gürtels liegt und wobei die eine Seite des Gürtels mit wenigstens einem auftreffendes Licht reflektierenden streifenförmigen Bereich (5) versehen ist, welcher sich nur über einen Teil der Gürtelbreite erstreckt, dadurch gekennzeichnet, dass die zwei zusammenwirkenden Verschlussteilen (2, 3) des Klettenverschlusses am einen Ihrer Enden mit einander verbunden sind und zusammen im Wesentlichen den Sicherheitsgürtel (1) bilden, wobei der auftreffende Licht reflektierenden streifenförmigen Bereich (5) sich sichtbar über die gesamte Länge des Gürtels (5) erstreckt und auf der wirksamen Fläche eines der Verschlussteile (2 oder 3) und auf der unwirksamen Fläche des anderen Verschlussteiles (3 oder 2) angeordnet ist.

2. Reflektierender Sicherheitsgürtel nach Anspruch 1, dadurch gekennzeichnet, dass der reflektierende streifenförmige Bereich (5) auf der wirksamen Fläche desjenigen Verschlussteiles (2), welches Ösen aufweist, und auf der unwirksamen Fläche des anderen Verschlussteiles (3) angeordnet ist.

3. Reflektierender Sicherheitsgürtel nach Anspruch 2, dadurch gekennzeichnet, dass das eine Verschlussteil (3) verhältnismässig kurz ist im Vergleich mit dem anderen Verschlussteil (2).

4. Reflektierender Sicherheitsgürtel nach Anspruch 3, dadurch gekennzeichnet, dass das Verschlussteil (2), welches Ösen aufweist, wesentlich länger ist als das andere Verschlussteil (3).

5. Reflektierender Sicherheitsgürtel nach einem der vorhergehenden Ansprüche, dadurch gekennzeichnet, dass beide Verschlussteile (2, 3) gleich breit sind.

6. Reflectierender Sicherheitsgürtel nach einem der vorhergehenden Ansprüche, dadurch gekennzeichnet, dass beide Verschlussteile (2, 3) durch Ultraschall miteinander verschweisst sind.

**Revendications**

1. Ceinture de sécurité réfléchissant la lumière comprenant deux parties coopératives (2, 3) d'un dispositif de fixation à contact et fermeture, la face de travail d'une partie de fixation (2 ou 3) se trouvant d'un côté de la ceinture de sécurité tandis que la face de travail de l'autre partie de fixation (3 ou 2) se trouve de l'autre côté de la ceinture de sécurité (1), un des côtés de la ceinture de sécurité (1) étant muni d'au moins une partie (5) en forme de ruban réfléchissant la lumière qui ne s'étend que sur une portion de la largeur de la ceinture de sécurité (1) caractérisée en ce que les deux parties coopérantes de fixation (2, 3) du dispositif de fixation à contact de fermeture sont reliées l'une à l'autre à l'une de leurs extrémités et forment sensiblement ensemble la ceinture de sécurité (1), tandis que la partie en forme de ruban (5) réfléchissant la lumière s'étend visible sur toute la longueur de la ceinture de sécurité et est placée sur la face de travail de l'une des parties de fixation (2 ou 3) et sur la face non travaillante de l'autre partie de fixation (3 ou 2).

2. Ceinture de sécurité selon la revendication 1, caractérisée en ce que la partie en forme de ruban, réfléchissant la lumière (5), est située sur la face de travail de la partie (2) de fixation comportant des boucles et sur la face non travaillante de l'autre partie (3) de fixation.

3. Ceinture de sécurité selon la revendication 2, caractérisée en ce que l'une (3) des deux parties de fixation (2, 3) n'est que d'une longueur relativement courte auprès de l'autre partie.

4. Ceinture de sécurité selon la revendication 3, caractérisée en ce que la longueur de la partie de fixation (2) comportant des boucles est beaucoup plus grande que celle de l'autre partie de fixation (3).

5. Ceinture de sécurité selon l'une quelconque des revendications précédentes, caractérisée en ce que les largeurs des deux parties de fixation (2, 3) sont sensiblement égales.

6. Ceinture de sécurité selon l'une quelconque des revendications précédentes, caractérisée en ce que les deux parties de fixation (2, 3) sont reliées l'une à l'autre par soudage aux ultrasons.

fig.2

fig.1

1